# EUROPEAN PATENT SPECIFICATION

(11) **EP 1 441 109 B1**
(45) Date of publication and mention of the grant of the patent: **09.09.2009**
(21) Application number: 03028868.2
(22) Date of filing: 16.12.2003
(51) Int. Cl.: F01K 3/24

(54) **Process and dedicated plant for generating electrical energy from waste**
Verfahren und Vorrichtung zur Erzeugung von elektrischer Energie aus Abfall
Procédé et appareil de production d'énergie électrique à partir de déchets

(30) Priority: 24.01.2003 IT MI20030108
(43) Date of publication of application: 28.07.2004
(73) Proprietor: Sistema Ecodeco S.p.A., 20159 Milano (IT)
(72) Inventor: Natta, Giuseppe, 20159 Milano (IT); Donati, Gianni, 20159 Milano (IT)
(74) Representative: Minoja, Fabrizio

(56) References cited:
- EP-A- 0 593 999
- EP-A- 0 671 587
- EP-A- 0 767 343
- PATENT ABSTRACTS OF JAPAN vol. 1998, no. 06, 30 April 1998 (1998-04-30) & JP 10 047638 A (HITACHI LTD;HITACHI ENG CO LTD; HITACHI ENG & SERVICES CO LTD), 20 February 1998 (1998-02-20)

## Description

The present invention relates in general to the area of waste disposal and in particular its object is a process and a dedicated plant for the generation of electrical energy using municipal solid waste (MSW).

### State of the art

The following description considers municipal solid waste or a fraction thereof obtained from selective collection, biomasses from farming or fuels derived therefrom, such as so-called secondary fuels (SF).

The known processes and existing plants for obtaining electrical energy from waste broadly reflect the prior art of processes for the production of electrical energy from fossil fuels.

Moreover they have considerable technological restraints and variants linked to the particular nature of the waste and the fuels derived therefrom.

The waste generally has, in relation to fossil fuels:
- a lower heat value, usually between 2000 Kcal/kg for MSW and over 3600 kcal/Kg for SF;
- a high content of incombustible, between 20 and 40%;
- a high content of pollutants, above all chlorine, usually varying between 0.2 and 1 %;
- more complex logistics and feeding to the combustion plant.

This means that the technologies used for combustion and for fumes treatment are of a special type and subject to numerous restraints due to the materials and to environment laws.

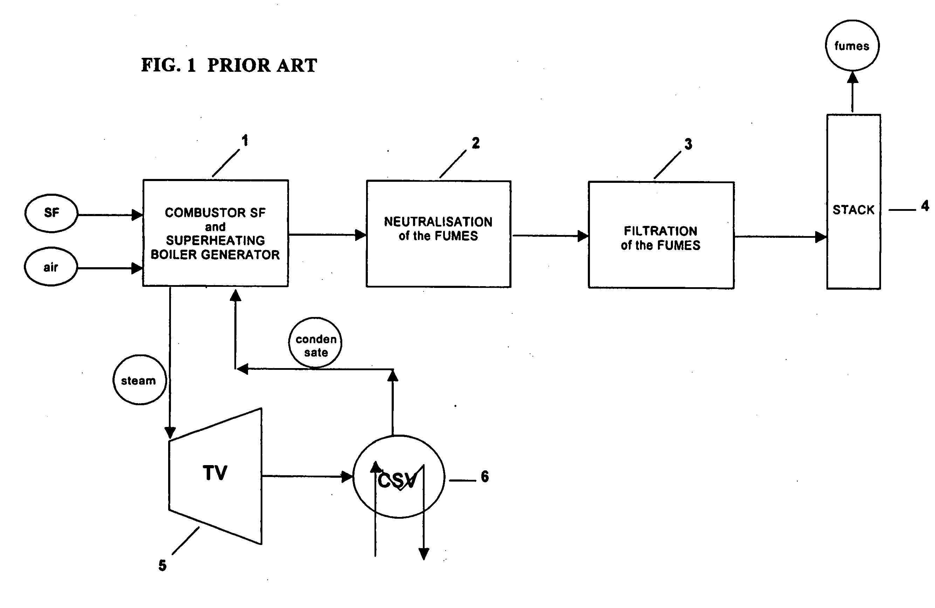

A typical plant suitable for the purpose is shown in Fig. 1 and is equipped with a combustor, often combined with a steam generator, denoted overall by (1), a fumes treatment system (2) for neutralisation of the acid substances produced by combustion and for absorption of the organic residues, and a filtering system (3) for finishing treatment and elimination of the particulate before emission at the stack (4) in accordance with environmental restrictions.

The superheated steam produced is expanded in the turbine (5) for the generation of electrical energy in the alternator connected thereto. The discharge of the turbine goes to a condenser (6), wherefrom the condensates are recycled to the combustor (1).

The combustion system can be of the grid or rotary drum type with annexed boiler and afterburner, or of the boiling or recirculating fluidised bed type.

In the first two cases operations are carried out in the combustion chamber at higher temperatures, around 950°C, and usually systems are used for injection into the combustion or afterburning chamber of bases for neutralising the acidity and ammonia for controlling the NOx (nitrous oxides).

In the case of fluidised beds, beds of sand and dolomite are used to control the combustion and acidity and operations are carried out at lower temperatures, around 850°C, to reduce the formation of the NOx.

The fumes treatment system can also be considerably complex in the case of production in the combustor of substances over the stack emission limits, such as NOx, chlorinated and polycyclic aromatic compounds, hydrochloric acid and sulphur oxides.

If the combustor is dimensioned well, dry treatment may be sufficient with soda or carbonate and the addition of active carbons which complete their action on the filters where the particulate is eliminated in full.

The main disadvantage of the processes currently adopted is the low electrical energy yields which are around 20%.

The main reason for the low yields is the low temperature of the steam which can be generated in the boiler of the waste combustor which normally produces superheated steam at 400°C and 40 bars with a consequent low heat content gradient in the steam turbine.

The low temperature of the steam produced (400°C) is a limit imposed by the resistance of the materials of the pipes of the boiler and above all of the superheaters to the corrosive atmosphere produced by the combustion of waste and in particular to the presence of hydrochloric acid, chlorine or chloride in the fumes.

By way of an example and referring to Fig. 1, we shall consider a combustion reactor of 7.5 t/h of SF having a low heat value of 4000 kcal/kg and which discharges at the stack 89 t/h of purified fumes at 200°C and with an oxygen content of 8% in volume.

35 t/h of superheated steam are produced at 40 bar and 400°C which, expanded in the turbine, produce a power of 8 MW entirely from SF.

The efficiency of the thermodynamic cycle is 23% and specific consumption is around 1.1 kWh/kg of SF.

EP 0767343 provides a steam superheater for superheating the saturated steam coming from a waste heat boiler before feeding it into the steam turbine. The condensate of the steam turbine is recycled to the waste heat boiler through the economizer for cooling to 450°-650° the combustion exhaust gas exiting the combustion furnace.

### Description of the invention

The general object of the invention is that of eliminating the disadvantages described above and to provide a process and dedicated system for obtaining electrical energy from waste simply and cleanly, in particular from SF.

The main object of the invention is that of providing a process and a dedicated plant for the production of electrical energy from waste, which allows an increase in energy production and in yields, with the same waste consumed, compared to conventional techniques.

These objects, and others which are to be described in greater detail herein under, are achieved by the process and plant according to the invention having the features of independent claims 1 and 7 respectively.

Advantageous embodiments of the invention are disclosed by the dependent claims.

Substantially, according to the invention, superheated steam is produced at a high temperature in a separate boiler and hence higher heat content gradients are achieved in the turbine.

Part of the condensates produced by the condenser of the steam turbine are recycled to the waste combustor and part to the superheating boiler to generate further steam.

### Brief description of the drawings

Further features and advantages of the invention will be made clearer by the following detailed description of one of its embodiments, purely an example and illustrated in the accompanying drawings, wherein:
- Fig. 1 is a block diagram of a conventional dedicated plant for the generation of electrical energy from waste;
- Fig. 2 is a block diagram of a dedicated plant according to the invention for the generation of electrical energy from waste.

### Detailed description of a preferred embodiment

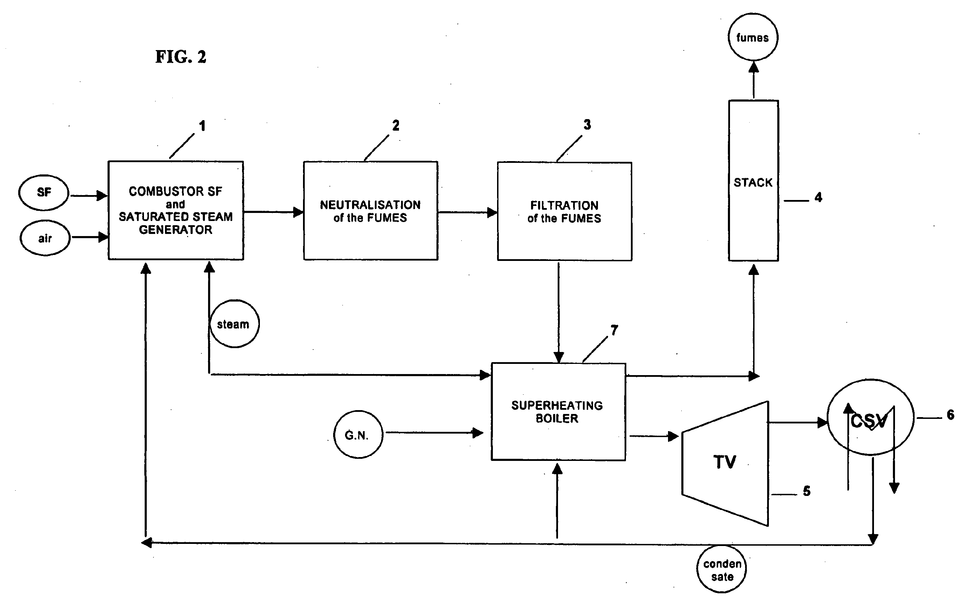

Referring to Fig. 2, the plant according to the invention provides, in relation to the conventional plant of Fig. 1, a separate boiler 7 for superheating of the steam coming from the SF combustor 1 and the generation of further superheated steam obtained from cooling the fumes, before feeding into the turbine.

Part of the condensates produced by the condenser 6 of the turbine is recycled to the waste combustor 1 and part to the superheating boiler 7 to generate further steam.

The process according to the invention substantially comprises:
- combustion of waste so as to produce saturated or slightly superheated steam at temperatures lower than 400°C and preferably between 250 and 390°C so that the pressure of said steam is between 40 and 200 bars and preferably around 100 bars. The fumes leave the combustor 1 at temperatures between 100 and 500°C and in any case at temperatures suitable for use in filtering: 200°C with commercial filter screens, 400°C with electrostatic filters or special filter screens in ceramic fibres.
- Neutralisation of the fumes in order to eliminate residual acidity.
- Filtering of the fumes in order to complete neutralisation of the fumes and eliminate the solids carried.
- Superheating of the steam produced in the separate boiler 7 fed with natural gas and using as comburent gas the purified hot fumes still containing considerable quantities of oxygen (between 6% and 13% in volume and preferably around 8%). The temperature of adiabatic combustion is between 500 and 700°C and preferably around 600°C. The superheated steam produced has a pressure approximately equal to that of the original saturated steam and a temperature over 400°C and between 450 and 700°C, preferably around 550°C. The boiler 7 superheats the saturated or slightly superheated steam which is supplied thereto by the SF combustor 1 and generates other superheated steam obtained by cooling fumes at the temperature of emission at the stack 4, generally between 100 and 150°C.
- The use of steam in the turbine 5 for the production of electrical energy.
- Recycling of the condensates produced by the condenser 6 of the steam turbine, part to the waste combustor 1 and part to the superheating boiler 7 to generate other steam.

In the following examples it is shown how the process forming the object of the present invention enables around 1.4 kWh/kg of SF to be generated and to obtain efficiencies in the thermodynamic cycle in the region of 30%, to be compared with the 1.1 kWh/kg and 23% which can be obtained by the conventional process.

### EXAMPLE 1

From a fluidised bed reactor for combustion of 7.5 t/h of SF with low heat value of 4000 kcal/kg, 89 t/h of fumes are obtained at a temperature of 200°C and with an oxygen content of 8% in volume, and 40t/h of saturated steam at 98 bars and 311°C.

The gas undergoes primary neutralisation in the fluidised bed of sand and dolomite, is further treated in a dry neutralisation tower to eliminate the remaining acidity and is filtered with a conventional bag filter to produce a completely purified gas.

The gas is sent as comburent air to the burner of the boiler together with 1070 Nm³/h of natural gas, with low heat value of 8749 kcal/Nm³, in order to bring the adiabatic temperature of the fumes to 604°C.

In this phase the traces of pollutants still present are destroyed and, without oxygen, any NOx still present are reduced.

In the lower part of the boiler, above the flame, the superheaters present raise the temperature of the steam fed to 540°C while in the upper part the fumes, in a back current with the recycled condensate, are cooled to 150°C, producing other saturated steam which is combined with that coming from the combustor to be superheated.

Overall 47 t/h of superheated steam are produced by the boiler and sent to the turbine where they generate 14.2 MW.

Of these 10.8 (76%) can be attributed to the SF and the rest to the N.G. in relation to the respective supplies of heat.

The specific production of the SFs is 1.44 kWh/Kg of SF and the yield around 30%, against values of 1.1 kWh/kg and 23% of the conventional plant.

### EXAMPLE 2

The process is the same as in the previous case except that the fumes exit the SF combustor at 400°C.

32.6 t/h of saturated steam are produced at 98 bars and 311°C and are used in the boiler and superheated.

553 Nm³/h of N.G. are consumed in the boiler to raise the temperature of the purified fumes to 604°C, and 41 t/h of superheated steam are produced at 540°C and 98 bars which, expanded in the turbine, generates 12.5 MW with thermodynamic efficiency of 30%.

The fraction of energy supplied with the SFs is 86% and the power 10.6 MW, not very different from that of the previous example.

The specific production of SFs is 1.42 kWh/Kg of SF and close to that of the previous example.

### EXAMPLE 3

The process is the same as in the previous case except that 31 t/h of steam are produced at 110 bars and 390°C.

Of the 89 t/h of fumes produced at 400°C only 70% is used as comburent of the N.G. to raise its temperature to 604°C while the remaining 30% is fed into the middle part of the boiler at 400°C.

In the boiler approximately 430 Nm³/h of N.G. are consumed and 40 t/h of superheated steam are produced at 540°C and 110 bars which, expanded in the turbine, generates 11.8 MW with thermodynamic efficiency of 30%.

The energy fraction supplied with the SFs is 89% and the power 10.5 MW, not very different from that of the previous example.

The specific production of the SFs is 1.4 kWh/Kg of SF and close to that of the previous example.

The new process therefore has, in relation to the prior art:
- higher thermodynamic efficiencies (30% over 23%);
- higher production of energy by 60 - 80% in absolute terms, 80 - 90% attributable to the SFs, whose yield rises from 1.1 kWh/kg to 1.4 kWh/kg;
- Lower investments, as the combustor is simplified, producing steam at relatively low temperatures, while the superheating boiler, which operates with purified gases, is of the conventional type;
- lower emissions of micropollutants and NOx in the atmosphere, thanks to afterburning which destroys the remaining residues and does not allow new formation, the precursors having been eliminated, and to the operation without oxygen with reduction in the remaining NOx.

Naturally the invention is not limited to the particular embodiment described and illustrated above, but instead numerous detailed changes may be made thereto, within the reach of an expert in the field, without thereby departing from the invention as defined by the annexed claims.

## Claims

1. Process for the generation of electrical energy from waste in a dedicated plant, comprising the following phases:
- combustion of waste and generation of steam;
- neutralisation of the fumes in order to eliminate the residual acidity of the combustion;
- filtering of the fumes in order to complete neutralisation of the fumes and eliminate the solids carried before emission at the stack **(4);**
- expansion in a turbine **(5)** of the steam produced for the generation of electrical energy;
- recycling of the condensates produced by the condenser **(6)** of the turbine;
wherein the steam produced by the combustion of waste is saturated or slightly superheated steam which is superheated in a separate boiler (7) before feeding into the turbine (5), said superheating in the separate boiler taking place with natural gas and using as comburent gas the purified hot fumes still containing considerable quantities of oxygen,
**characterised in that**
said recycling of the condensates from the condenser (6) of the steam turbine (5) takes place partly to the waste combustor (1) and partly to the superheating boiler (7) for the generation of **superheated** steam.

2. Process according to claim 1, **characterised in that** said saturated or slightly superheated steam produced by combustion of the waste has temperatures lower than 400°C and preferably between 250 and 390°C, and a pressure between 40 and 200 bars and preferably around 100 bars.

3. Process according to claim 1, wherein said combustion fumes have temperatures of 200°C suitable for use with commercial filters or 400°C suitable for electrostatic filters or special filter screens of ceramic fibres.

4. Process according to any one of the previous claims, **characterised in that** the adiabatic combustion temperature in said separate boiler (7) is between 500 and 700°C and preferably around 600°C.

5. Process according to claim 4, **characterised in that** the superheated steam produced in said separate boiler (7) has a pressure approximately equal to that of the original saturated steam and a temperature higher than 400°C, between 450 and 700°C and preferably around 550°C.

6. Process according to any one of the previous claims, wherein in said separate boiler (7), in addition to superheating of the saturated or slightly superheated steam obtained from combustion of waste, generation takes place of other superheated steam obtained from cooling of the fumes at the temperature of emission at the stack (4), between 100 and 150°C.

7. Dedicated plant for the generation of electrical energy from waste, comprising:
- a waste combustor/steam generator (1);
- a neutraliser of fumes (2) designed to eliminate the residual acidity;
- a system of fumes filtering (3) designed to complete neutralisation of the fumes and eliminate the solids carried before emission at the stack (4);
- a turbine (5) designed to generate electrical energy from the steam produced by the combustor (1);
- a condenser (6) for recycling the condensates,
- a separate boiler (7) for superheating of the saturated or slightly superheated steam produced by the combustor (1) before feeding of the same into the turbine (5),
**characterised in that**
means are provided for recycling the condensates produced by the condenser (6) of the steam turbine (5) partly to the waste combustor (1) and partly to the superheating boiler (7) for the generation of superheated steam.

8. Plant according to claim 7, **characterised in that** said waste combustor (1) is adapted to produce saturated or slightly superheated steam at temperatures lower than 400°C and preferably between 250 and 390°C., and at a pressure between 40 and 200 bars and preferably around 100 bars.

9. Plant according to claim 7, wherein said system for fumes filtering (3) comprises: commercial filter screens for fumes at a temperature of 200°C or electrostatic filters or special filter screens of ceramic fibres at a temperature of 400°C.

10. Plant according to any one of claims 7 to 9, **characterised in that** said superheating boiler (7) is adapted to work at an adiabatic combustion temperature between 500 and 700°C and preferably around 600°C.

11. Plant according to claim 10, **characterised in that** said separate boiler (7) is adapted to produce superheated steam at a pressure approximately equal to that of the original saturated steam and at a temperature above 400°C, between 450 and 700°C and preferably around 550°C.

12. Plant according to any one of claims 7 to 11, wherein said boiler (7), in addition to superheating the saturated or slightly superheated steam which is supplied thereto by the waste combustor (1), is adapted to generate other superheated steam obtained from cooling of fumes to the temperature of emission at the stack (4), between 100 and 150°C.

## Patentansprüche

1. Verfahren zur Erzeugung elektrischer Energie aus Abfall in einer dazu bestimmten Anlage, umfassend die folgenden Phasen:
- Verbrennung von Abfall und Erzeugung von Dampf;
- Neutralisierung der Dämpfe, um den verbleibenden Säuregehalt der Verbrennung zu entfernen;
- Filtrierung der Dämpfe, um die Neutralisation der Dämpfe abzuschließen und die mitgeführten Feststoffe vor der Emission am Schornstein (4) zu entfernen;
- Expansion des zur Erzeugung von elektrischer Energie produzierten Dampfes in einer Turbine (5);
- Rückführung der durch den Kondensator (6) der Turbine produzierten Kondensate,
wobei der durch die Verbrennung von Abfall produzierte Dampf gesättigter oder leicht überhitzter Dampf ist, der in einem separaten Boiler (7) vor der Zufuhr in die Turbine (5) überhitzt wird, wobei die Überhitzung in dem separaten Boiler mit natürlichem Gas erfolgt, und als Verbrennungsgas die gereinigten heißen Dämpfe verwendet werden, die noch immer beträchtliche Mengen Sauerstoff enthalten,
**dadurch gekennzeichnet, dass**
die Rückführung der Kondensate von dem Kondensator (6) der Dampfturbine (5) teils zur Abfallbrennkammer (1) und teils zum Überhitzungsboiler (7) zur Erzeugung von überhitztem Dampf erfolgt.

2. Verfahren nach Anspruch 1, **dadurch gekennzeichnet, dass** der durch die Verbrennung des Abfalls produzierte gesättigte oder leicht überhitzte Dampf Temperaturen aufweist, die niedriger als 400°C. sind und bevorzugt zwischen 250 und 390°C liegen, und einen Druck zwischen 40 und 200 bar und bevorzugt um 100 bar aufweist.

3. Verfahren nach Anspruch 1, wobei die Verbrennungsdämpfe eine Temperatur von 200°C aufweisen, die für die Verwendung mit kommerziellen Filtern geeignet ist, oder von 400°C, die für elektrostatische Filtern oder spezielle Filtersiebe aus Keramikfasern geeignet ist.

4. Verfahren nach einem der vorangehenden Ansprüche, **dadurch gekennzeichnet, dass** das die adiabatische Verbrennungstemperatur in dem separaten Boiler (7) zwischen 500 und 700°C, und bevorzugt um 600°C beträgt.

5. Verfahren nach Anspruch 4, **dadurch gekennzeichnet, dass** der in dem separaten Boiler (7) produzierte überhitzte Dampf einen Druck aufweist, der ungefähr dem des ursprünglichen gesättigten Dampfes gleich ist, und eine Temperatur, die mehr als 400°C, zwischen 450 und 700°C, und bevorzugt um 550°C beträgt.

6. Verfahren nach einem der vorangehenden Ansprüche, wobei in dem separaten Boiler (7) zusätzlich zu der Überhitzung des gesättigten oder leicht überhitzten Dampfes, der aus der Verbrennung von Abfall gewonnen wird, die Erzeugung von weiterem überhitztem Dampf stattfindet, der aus dem Abkühlen der Dämpfe bei der Temperatur der Emission am Schornstein, zwischen 100 und 150°C, gewonnen wird,

7. Zur Erzeugung elektrischer Energie aus Abfall bestimmte Anlage, umfassend:
- eine Abfallbrennkammer/einen Dampferzeuger (1);
- einen Neutralisator für Dämpfe (2), der zum Entfernen des verbleibenden Säuregehalts ausgelegt ist;
- ein System zur Filtrierung der Dämpfe (3), das ausgelegt ist, die Neutralisation der Dämpfe abzuschließen und die mitgeführten Feststoffe vor der Emission am Schornstein (4) zu entfernen;
- eine Turbine (5), die ausgelegt ist, elektrische Energie durch den Dampf zu erzeugen, der durch die Verbrennungskammer (1) produziert wird;
- einen Kondensator (6) zur Rückführung der Kondensate,
- einen separaten Boiler (7) zum Überhitzen des gesättigten oder leicht überhitzten Dampfes, der durch die Verbrennungskammer (1) produziert wird, bevor dieser der Turbine (5) zugeführt wird,
**dadurch gekennzeichnet, dass**
Mittel vorgesehen sind, um von dem Kondensator (6) der Dampfturbine (5) produzierte Kondensate teils zur Abfallbrennkammer (1) und teils zum Überhifzungsboifer (7) zur Erzeugung von überhitztem Dampf zurückzuführen.

8. Anlage nach Anspruch 7, **dadurch gekennzeichnet, dass** Abfallverbrennungskammer (1) angepasst ist, gesättigten oder leicht überhitzten Dampf mit Temperaturen, die niedriger als 400°C sind und bevorzugt zwischen 250 und 390°C liegen, und einem Druck zwischen 40 und 200 bar und bevorzugt um 100 bar zu produzieren.

9. Anlage nach Anspruch 7, wobei das System zur Filtrierung von Dämpfen (3) umfasst: kommerzielle Filtersiebe für Dämpfe mit einer Temperatur von 200°C, oder elektrostatische Filter oder spezielle Filtersiebe aus Keramikfasern mit einer Temperatur von 400°C.

10. Anlage nach einem der Ansprüche 7 bis 9, **dadurch gekennzeichnet, dass** der Überhitzungsboiler (7) angepasst ist, bei einer adiabatischen Verbrennungstemperatur zwischen 500 und 700°C, und bevorzugt um 600°C zu arbeiten.

11. Anlage nach Anspruch 10, **dadurch gekennzeichnet, dass** der separate Boiler (7) angepasst ist, überhitzten Dampf mit einem Druck, der ungefähr dem des ursprünglichen gesättigten Dampfes gleich ist, und mit einer Temperatur oberhalb von 400°C, zwischen 450 und 700°C, und bevorzugt um 550°C, zu produzieren.

12. Anlage nach einem der Ansprüche 7 bis 1 1 , wobei der separate Boiler (7) zusätzlich zu der Überhitzung des gesättigten oder leicht überhitzten Dampfes, der ihm von der Abfallbrennkammer (1) zugeführt wird, angepasst ist, weiteren überhitzten Dampf zu erzeugen, der aus dem Abkühlen der Dämpfe auf die Temperatur der Emission am Schornsteln (4), zwischen 100 und 150°C, gewonnen wird.

## Revendications

1. Procédé pour générer de l'énergie électrique à partir de déchets dans une installation spécialisée, comprenant les phases suivantes :
- la combustion des déchets et la génération de vapeur d'eau ;
- la neutralisation des fumées afin de supprimer l'acidité résiduelle de la combustion ;
- la filtration des fumées afin de terminer la neutralisation des fumées et de supprimer les solides transportés avant l'émission dans la cheminée (4) ;
- l'expansion dans une turbine (5) de la vapeur d'eau produite pour la génération d'énergie électrique ;
- le recyclage des condensats produits par le condenseur (6) de la turbine ;
dans lequel la vapeur d'eau produite par la combustion des déchets est de la vapeur d'eau saturée ou légèrement surchauffée qui est surchauffée dans une chaudière séparée (7) avant l'alimentation dans la turbine (5), ladite surchauffe dans la chaudière séparée ayant lieu avec du gaz naturel et en utilisant en tant que gaz comburant, les fumées chaudes purifiées contenant encore des quantités considérables d'oxygène,
**caractérisé en ce que :**
ledit recyclage des condensats provenant du condenseur (6) de la turbine (5) à vapeur d'eau, a lieu partiellement dans la chambre de combustion des déchets (1) et partiellement dans la chaudière de surchauffe (7) pour la génération de vapeur d'eau surchauffée.

2. Procédé selon la revendication 1, **caractérisé en ce que** ladite vapeur d'eau saturée ou légèrement surchauffée produite par la combustion des déchets a des températures inférieures à 400°C et de préférence comprises entre 250 et 390 °C, et une pression comprise entre 40 et 200 bars et de préférence d'environ 100 bars.

3. Procédé selon la revendication 1, dans lequel lesdites fumées de combustion ont des températures de 200 °C appropriées pour l'utilisation avec des filtres commerciaux ou de 400 °C appropriées pour des filtres électrostatiques ou des tamis de filtration spéciaux en fibres de céramiques.

4. Procédé selon l'une quelconque des revendications précédentes, **caractérisé en ce que** la température de combustion adiabatique dans ladite chaudière séparée (7) est comprise entre 500 et 700 °C et de préférence d'environ 600 °C.

5. Procédé selon la revendication 4, **caractérisé en ce que** la vapeur d'eau surchauffée produite dans ladite chaudière séparée (7) a une pression approximativement identique à celle de la vapeur d'eau saturée d'origine et une température supérieure à 400°C, comprise entre 450 et 700 °C et de préférence d'environ 550°C.

6. Procédé selon l'une quelconque des revendications précédentes, dans lequel dans ladite chaudière séparée (7), en plus de la surchauffe de la vapeur d'eau saturée ou légèrement surchauffée obtenue par la combustion des déchets, on assiste à une génération d'une autre vapeur d'eau surchauffée obtenue par le refroidissement des fumées à la température d'émission dans la cheminée (4), entre 100 et 150 °C.

7. Installation spécialisée pour la génération d'énergie électrique à partir de déchets, comprenant :
- une chambre de combustion de déchets / un générateur de vapeur d'eau (1) ;
- un neutralisateur de fumées (2) conçu pour supprimer l'acidité résiduelle ;
- un système de filtration de fumées (3) conçu pour achever la neutralisation des fumées et pour supprimer les solides transportés avant l'émission dans la cheminée (4) ;
- une turbine (5) conçue pour générer de l'énergie électrique à partir de la vapeur d'eau produite par la chambre de combustion (1) ;
- un condenseur (6) pour recycler les condensats,
- une chaudière séparée (7) pour surchauffer la vapeur d'eau saturée ou légèrement surchauffée produite par la chambre de combustion (1) avant l'alimentation de cette dernière dans la turbine (5),
**caractérisée en ce que :**
on prévoit des moyens pour recycler les condensats produits par le condenseur (6) de la turbine (5) à vapeur d'eau partiellement dans la chambre de combustion (1) de déchets et partiellement dans la chaudière de surchauffe (7) pour la génération de vapeur d'eau surchauffée.

8. Installation selon la revendication 7, **caractérisée en ce que** ladite chambre de combustion (1) de déchets est adaptée pour produire de la vapeur d'eau saturée ou légèrement surchauffée à des températures inférieures à 400 °C et de préférence comprises entre 250 et 390 °C, et à une pression comprise entre 40 et 200 bars et de préférence d'environ 100 bars.

9. Installation selon la revendication 7, dans laquelle ledit système pour la filtration (3) des fumées comprend : des tamis de filtration commerciaux pour les fumées à une température de 200 °C ou des filtres électrostatiques ou des tamis de filtration spéciaux en fibres de céramique à une température de 400 °C.

10. Installation selon l'une quelconque des revendications 7 à 9, **caractérisée en ce que** ladite chaudière de surchauffe (7) est adaptée pour fonctionner à une température de combustion adiabatique comprise entre 500 et 700 °C et de préférence d'environ 600 °C.

11. Installation selon la revendication 10, **caractérisée en ce que** ladite chaudière séparée (7) est adaptée pour produire de la vapeur d'eau surchauffée à une pression approximativement égale à celle de la vapeur d'eau saturée d'origine et à une température supérieure à 400 °C, comprise entre 450 et 700 °C et de préférence d'environ 550 °C.

12. Installation selon l'une quelconque des revendications 7 à 11, dans laquelle ladite chaudière (7), en plus de surchauffer la vapeur d'eau saturée ou légèrement surchauffée qui y est alimentée par la chambre de combustion (1) des déchets, est adaptée pour générer une autre vapeur d'eau surchauffée obtenue à partir du refroidissement des fumées à la température d'émission dans la cheminée (4), comprise entre 100 et 150 °C.
